# EUROPEAN PATENT APPLICATION

(11) **EP 1 722 537 A1**
(43) Date of publication of application: **15.11.2006**
(21) Application number: 06113669.3
(22) Date of filing: 09.05.2006
(51) Int. Cl.: H04L 29/08, H04L 29/06

(54) **Method for processing messages, data processing device and computer program product**

(30) Priority: 13.05.2005 FI 20055224; 19.05.2005 FI 20055239
(71) Applicant: Nethawk Oyj, 90570 Oulu (FI)
(72) Inventor: Laakkonen, Harri, FI-90550, Oulu (FI); Vattula, Esa, FI-90420, Oulu (FI)
(74) Representative: Antila, Harri Jukka Tapani

(57) **Abstract**

A method for processing messages in a data processing device comprising, a data processing device and a computer program product. The device comprises a data transmission unit (106), which is configured to be connected to a data transmission system and to receive data including messages with the data transmission system; and a processing unit (102) connected to the data transmission unit for processing data, the processing unit being configured to control the processing of the received data in the decoding stack based on the decoding of the received data performed in the decoding layers, the decoding stack comprising at least a lower decoding layer and an upper decoding layer. The processing unit (102) is further configured to form the decoding stack such that at least one decoding layer comprises two or more decoding layers based on different protocols and at least one switching element, and is configured to detect a control command for controlling the processing of data in the decoding stack, and the switching element is configured to control the processing of data in the decoding stack on the basis of the detected control command.

## Description

### FIELD

The invention relates to a method for processing messages in a data processing device, a data processing device and a computer program product that encodes a computer process for processing received messages.

### BACKGROUND

In digital data transmission networks, such as mobile telephone networks and local networks, different data processing devices are used, such as analyzers and simulators, for measuring the operation of data transmission networks, for example. In order to enable a connection between different devices, the data processing devices have to follow a certain protocol. The protocols refer to formal definitions of such operational series that allow ensuring the communication between operations at the same layer of the operational hierarchy. When the data processing device has received a message for instance from a data transmission network, the message can be decoded in accordance with a certain protocol.

Data transmission networks and protocols are being developed at a rapid pace, and therefore the measuring equipment thereof should be easily convertible to suit different networks. Often the new protocol stacks include many of the old protocols such that they are transferred over new transport layer protocols. Consequently the protocol stacks of the measuring equipment should be easy to modify, preferably at the customer's premises. However, there has been a lack of methods enabling to easily modify the protocol stacks and also to form different protocol stacks with an as high as possible degree of reuse.

### BRIEF DESCRIPTION

It is an object of the invention to provide an improved method for processing messages, an improved data processing device and an improved computer program product that encodes the computer process for processing received messages.

According to an aspect of the invention there is provided a method for processing messages in a data processing device comprising: receiving data including messages from a data transmission system; controlling the processing of received data in a decoding stack based on the the processing of received data in a decoding stack based on the decoding of received data performed in the decoding layers, the decoding stack comprising at least a lower decoding layer and an upper decoding layer. The method also comprises forming the decoding stack such that at least one decoding stack comprises two or more decoding layers based on different protocols; providing the decoding stack with at least one switching element; detecting a control command for controlling the processing of data in the decoding stack; and controlling by means of the switching element the processing of data in the decoding stack based on the control command detected.

According to another aspect of the invention there is provided a data processing device, comprising: a data transmission unit configured to be connected to a data transmission system and to receive data including messages with the data transmission system; and a processing unit connected to the data transmission unit for processing data, the processing unit being configured to control the processing of received data in a decoding stack based on the decoding of the received data performed in the decoding layers, the decoding stack comprising at least one lower decoding layer and an upper decoding layer. The processing unit is further configured to form the decoding stack such that at least one decoding layer comprises two or more decoding layers based on different protocols and at least one switching element and is configured to detect a control command for controlling the processing of data in the decoding stack; and the switching element is configured to control the processing of data in the decoding stack based on the control command detected.

According to a further aspect of the invention there is provided a computer program product that encodes a computer process for processing received messages, the computer process comprising: receiving data including messages from a data transmission system; controlling the processing of received data in a decoding stack based on the decoding of the received data performed in the decoding layers, the decoding stack comprising at least a lower decoding layer and an upper decoding layer. In addition, the computer program product comprises forming the decoding stack such that at least one decoding layer comprises two or more decoding layers based on different protocols; providing the decoding stack with at least one switching element; detecting a control command for controlling the processing of data in the decoding stack; and controlling by means of the switching element the processing of data in the decoding stack based on the control command detected.

Several advantages are achieved with the invention. The same stack elements, such as decoders and switching elements, can be used to form different decoding stacks. Building simpler decoding stacks is made possible, since the decoding stacks can be modified by modifying the descriptions thereof. In this method the same decoding stack can still be used even if the data processing device were to be connected to different networks. Dividing the decoding into several parallel processes is easily carried out and the decoding capacity can thus be efficiently increased by adding parallel processor cores.

### LIST OF DRAWINGS

In the following the invention will be explained in greater detail by means of the preferred embodiments with reference to the accompanying drawings, in which
Figure 1 shows a data transmission system and a data processing device for processing received messages,
Figure 2 shows an analyzer,
Figure 3 shows a method for processing messages in a data processing device,
Figure 4 shows an example of a decoding stack with branching,
Figure 5 shows an example of the implementation of the decoding stack according to Figure 4,
Figure 6 shows an example of a decoding stack with several inputs,
Figure 7 shows an example of the implementation of the decoding stack according to Figure 6,
Figure 8 shows an example of a decoding stack with branching,
Figure 9 shows an example of the implementation of the decoding stack according to Figure 8,
Figure 10 shows an example of a decoding stack and an application apparatus,
Figure 11 shows an example of the structure of a decoding stack,
Figure 12 shows an example of the formation of stack elements in the decoding stack,
Figure 13 shows an example of the routing of data in the decoding stack,
Figure 14 shows an example of a method for processing messages, and
Figure 15 shows an example of dividing the decoding into several parallel processes.

### DESCRIPTION OF THE EMBODIMENTS

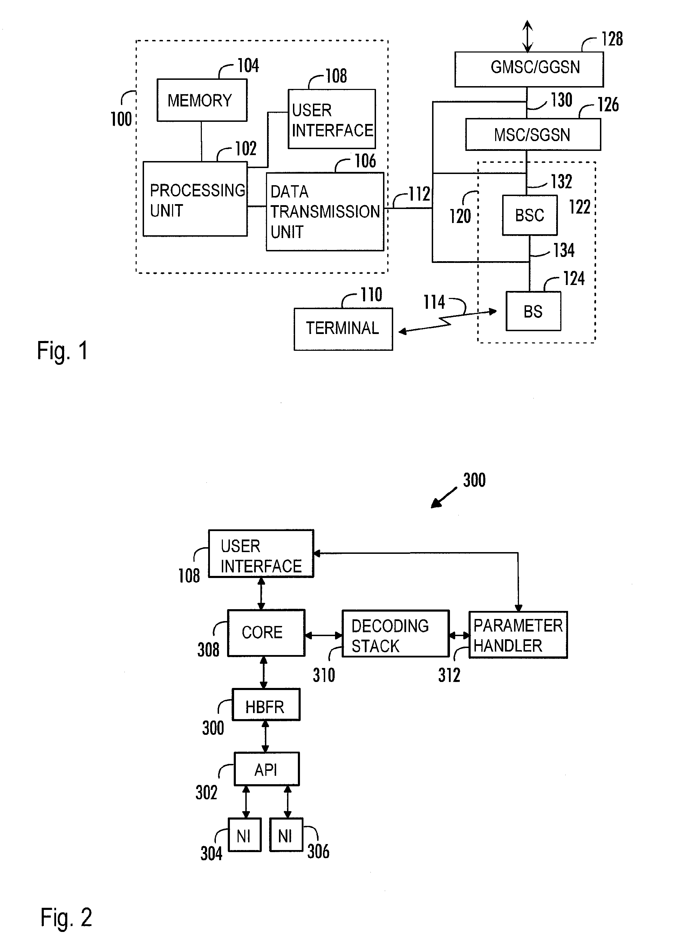

Figure 1 shows an example of a data transmission system, in which the data processing solution shown can be applied. The data transmission system may be based on for instance GSM (Global System for Mobile Communications), WCDMA (Wideband Code Division Multiple Access) or CDMA (Code Division Multiple Access) technology.

The data transmission system corresponds for instance to a combined structure of the GSM (Global System for Mobile Communications) and the GPRS (General Packet Radio Service) systems. The GSM network elements are responsible for the implementation of circuit-switched connections and the GPRS network elements are responsible for the packet-switched connections. However, some of the network elements may be common to both systems.

A switching centre 126 represents a mobile services switching centre MSC and a serving GPRS support node SGSN, which make the circuit- switched and packet-switched connections possible in the data transmission system. The data transmission network comprises for instance a gateway 128 comprising a gateway mobile service switching centre GMSC and a gateway GPRS support node GGSN. The GMSC attends to the circuit-switched connections between the data transmission network and external networks, such as the public land mobile network PLMN or the public switched telephone network PSTN and the GGSN attends to the packet-switched connections between the data transmission network and external networks, such as the Internet.

The switching centre 126 controls a radio access network RAN 120, which comprises at least one base station controller BSC 122. The base station controller 122 controls at least one base station 124. The base station controller 122 may also be referred to as a radio network controller and the base station 124 may be referred to as node B. A terminal 110 of the data transmission system may communicate with, for instance, at least one base station 124 through an air interface 114.

The data processing device 100 may communicate with the data transmission system using fixed cable connections, GSM/GPRS/EDGE connections or for instance short-range wireless connections, such as Bluetooth, infrared or WLAN (Wireless Local Area Network) connections. A connection 112 between the device 100 and the data transmission system can be connected for instance to one or more lines 130, 132, 134 between data communication system elements 124, 122, 126, 128.

The data processing device 100 shown in Figure 1 is for instance a protocol analyzer used for measuring the operation of data transmission systems, a simulator or an interface card. The device 100 may be a personal computer provided for instance with the Windows® or some other operating system connected to the interfaces 130, 132 and 134 to be measured by means of network interface cards and measuring sensors. The device 100 comprises a processing unit 102 controlling the operations of the device and a data transmission unit 106. The processing unit 102 refers to a block controlling the operation of the devices, the block currently being typically implemented as a processor including the programs thereof, but different equipment implementations are also possible, for instance a circuit composed of separate logic components or one or more application-specific integrated circuits (ASIC). Also a combination of these different implementations is possible. The data transmission unit 106 may comprise a transceiver and an antenna, by means of which the device 100 receives and sends signals.

The device 100 may also comprise a user interface 108 that enables to control the operations of the device 100 and to monitor the operations carried out by the device 100. The user interface 108 comprises for instance a display and a keyboard. Depending on the device 100 the user interface 108 may comprise various user interface parts. The device 100 may also comprise a memory 104 and several other different elements depending on the purpose of use of the device in question.

The data transmission unit 106 is configured to be connected to the data transmission system and to monitor the messages propagating in the data transmission system.

The processing unit 102 attends to the processing of data, such as decoding received messages with decoding components according to a protocol. The processing unit 102 is configured to control the processing of received data in a decoding stack on the basis of the decoding of the received data performed in decoding layers, the decoding stack comprising at least a lower decoding layer and an upper decoding layer. Data processing in a decoding stack can further be controlled for instance on the basis of control parameters received from the user interface.

In an embodiment the processing unit 102 is also configured to form a decoding stack such that at least one decoding layer comprises two or more decoding layers based on different protocols and at least one switching element configured to detect a control command for controlling the processing of data in the decoding stack and the switching element is configured to control the processing of data in the decoding stack on the basis of the detected control command.

Figure 2 shows an example of a data processing device 300 according to an embodiment, such as a protocol analyzer. The device 300 comprises one or more network interface cards 304, 306. The device 300 may be connected to the interfaces to be measured by means of the network interface cards 304, 306 and the measuring sensors. The network interface card 304, 306 is connected through a device driver 302 to a core 308 of the analyzer, which in turn attends to the management of the network interface card 304, 306. The core 308 is also responsible for processing the internal traffic captured from a telecommunications network, such as a cellular radio network, for instance filtering desired data and controlling the processing of messages. Upon reception of a message from the network interface card 304, 306 the device driver 302 stores the message in a history buffer 300. The history buffer 300 arranges the messages on the basis of the time stamps and stores them in a cyclic buffer, from where the core 308 retrieves them for further processing.

The core 308 decodes the received messages in a decoding stack. As a result of the decoding the messages may be shown in the user interface 108. The user interface 108 may also be used for controlling the data processing device 300. A parameter handler 312 offers an interface from the decoding stack to read the values of the parameters provided in the user interface 108.

In an embodiment the decoding stack 310 is formed of decoding layers and of at least one switching element that controls the flow of data between the decoding layers. The decoding stack may further comprise at least one application program component, which may perform for instance deciphering or implement a state machine for controlling the switching elements. The decoding stack can be described, for instance using extensible markup language, XML, which is an adequately common language to allow defining various types of decoding stacks.

The stack entity to be used in decoding reads the XML description of the decoding stack and creates stack and switching elements corresponding thereto and connects them together in accordance with the decoding stack.

The decoding layers decode the messages according to the protocol into logical information elements and a textual description. The decoding layer is formed of a stack element that may include a protocol decoder. The stack element encapsulates the protocol decoder in order to enable the use of several protocol decoders provided with different interfaces. One protocol decoder may be provided for each protocol and version. The stack elements implement a subscription and delivery interface, through which subscription points can be requested from the decoder and subscriptions to be set and removed. The switching elements control the flow of the data to be decoded in the decoding stack.

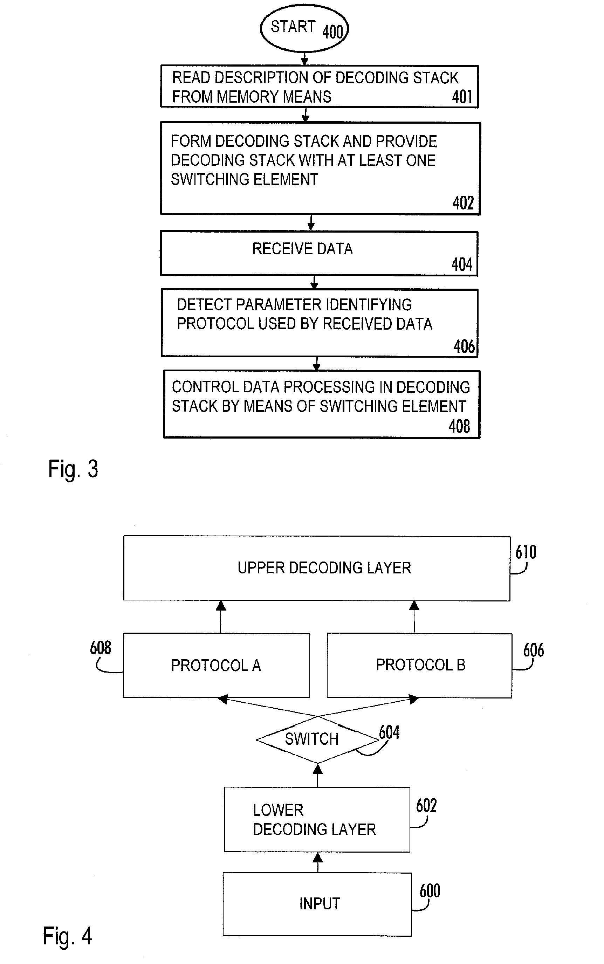

There are various kinds of switching elements. In an embodiment the switching element is a switch/fork controlled by the user, a user fork, where the user selects into which upper stack element the data to be decoded is delivered. This is explained in more detail in Figure 4.

In an embodiment the switching element is an automatic connection, in which case the switching element automatically selects a lower layer based on the decoding result into which upper stack element the data to be decoded is delivered.

In an embodiment the switching element may be a dynamic fork, in which the application program component monitors the establishment of connections at different protocol layers and interfaces and controls the switching element to perform the data delivery on the basis of the performed monitoring.

Figure 3 shows an example of a method for processing messages in a data processing device. The method starts at 400. In 401 the description of the decoding stack is read from a memory means. In 402 the decoding stack is formed on the basis of the description in such a manner that at least one decoding layer comprises two or more decoding layers based on different protocols. Furthermore, in 402 the decoding layer is provided with at least one switching element. In 404 data including messages is received from the data transmission system. In 406 a control command is detected for controlling the processing of data in the decoding stack and in 408 the processing of data is controlled by means of the switching element in the decoding stack on the basis of the decoding of the received data performed in the decoding layers and for instance the parameters received from the user interface.

Figure 4 shows a decoding stack according to an embodiment. In this example the decoding stack comprises a lower decoding layer 602, an upper decoding layer 610 between both the lower and the upper decoding layer, two decoding layers 606 and 608 mutually at the same operational hierarchy layer. The two decoding layers 606 and 608 employ mutually different protocols for processing data. The decoding layer 606 may employ for instance an IPv4 protocol and the decoding layer 608 employs an IPv6 protocol, for instance.

The received data is delivered to the lower decoding layer 602 from the input 600 of the data. The input refers to an interface of the device driver 302 transmitted by the history buffer 300 and the core 308 to the decoding stack 310. From the lower decoding layer 602 the data is delivered either through the decoding layer 606 or the decoding layer 608 to the upper decoding layer 610, which is for instance a transmission control protocol TCP layer. In order for the data obtained from the network to be delivered to a proper branch, i.e. either through decoding layer 606 or 608, to the upper decoding layer, then after the lower decoding layer 602 the data is delivered to either of the decoding layers 606, 608. The delivery to a proper decoding layer is carried out on the basis of a control command detected by means of a switching element 604.

In an embodiment the processing unit is configured to show on the display of the user interface the possible protocol alternatives to be selected by the user, into which the processing of messages can be controlled. Then the user interface is provided with a display, from which the user may select the connections to be monitored and the protocol to be used with them. In the case shown in Figure 4 the user may be requested on the display whether to select the IPv4 protocol or the IPv6 protocol. In this embodiment the user may therefore make a final selection about which route to employ to proceed in the decoding stack. When the user has made a choice by means of the user interface, the processing unit establishes control commands based on the user's choices, on the basis of which the switching element controls the data through the selected decoding layer 606 or 608 to the upper decoding layer 610, where the branches are joined again. In practice, the switching element retrieves the user's choice connection-specifically from the parameter processor.

The decoding stack can if necessary also be provided with more than one switching elements 604. Thus, in the case shown in Figure 4 for instance, after the upper decoding layer 610 a second switching element may follow that directs the data into the branches above the upper decoding layer 610.

In the case shown in Figure 4 the XML description could be as follows:

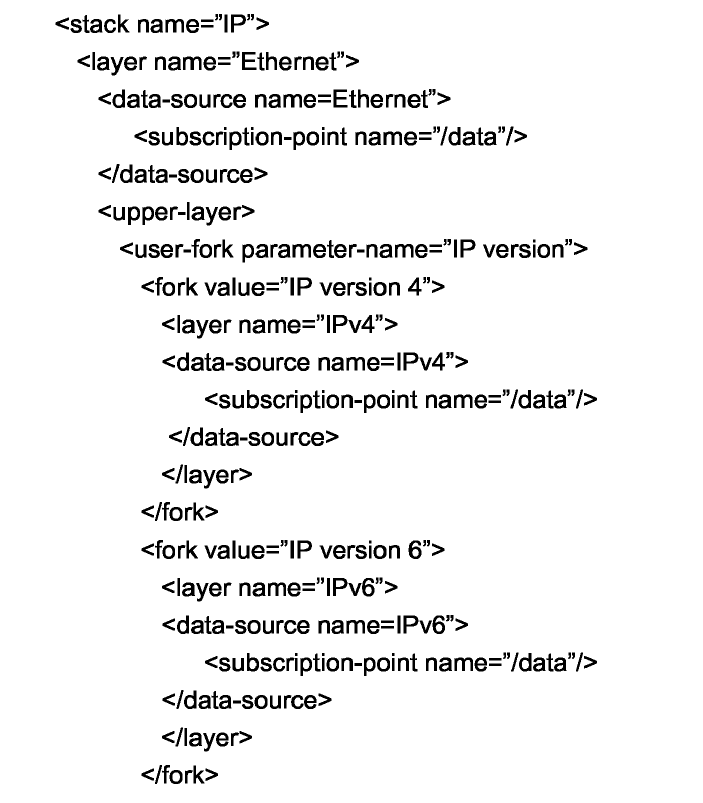

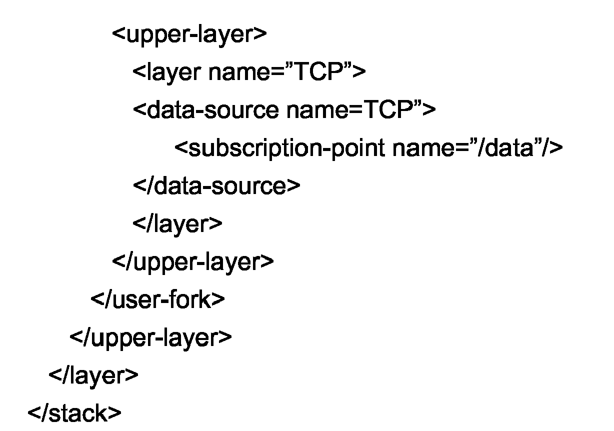

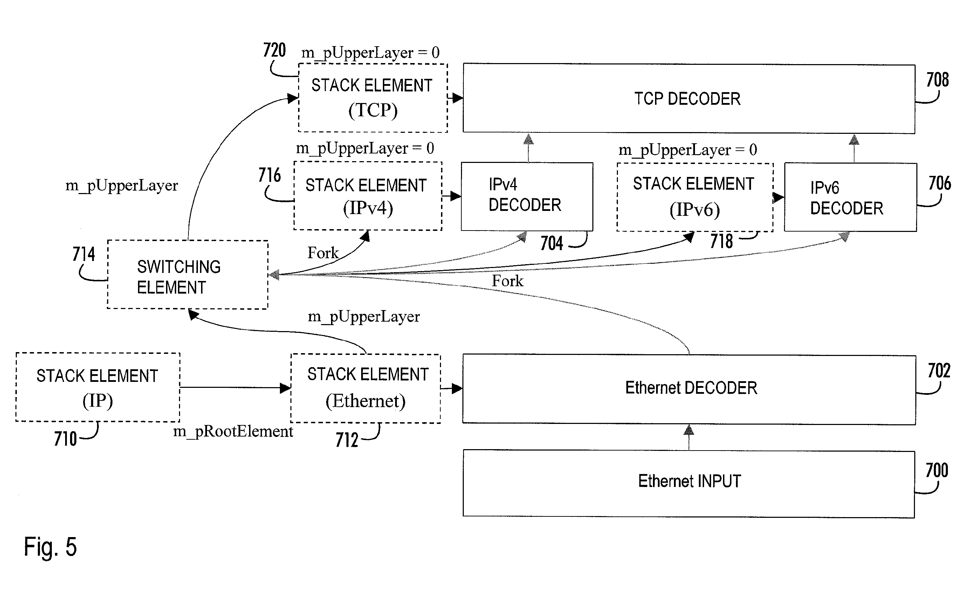

The user therefore selects in the previous embodiment the version of the IP to be used. Figure 5 shows an example of how the decoding stack according to Figure 4 is implemented. The decoding stack is formed such that the stack entity reads the XML description of the decoding stack and creates the corresponding and required stack elements, switching elements, protocol decoders and application program components and connects them together in accordance with the description. Stack element entities 710, 712, 714, 716, 718 and 720 are created from the "stack" element in the decoding stack and from the "layer" element in the decoding layer in the XML description, the stack element entities loading decoders 702, 704, 706 and 708 from the memory means. The "data source" elements in the XML description describe the name and the path of the lower layer subscription that allows subscribing the upper layer data. This makes it possible for the decoder to remain totally unaware of the surroundings thereof, since all the required data may be read from the XML description of the stack. If a switching element is located below the layer, a subscription is placed to the switching element. The switching element also places a subscription to the lower layer and delivers the subscription result to the selected upper layer. In the example shown in Figure 5 the lower decoding layer 702 is an Ethernet layer that receives data from an Ethernet input 700. The switching element 714 finally decides whether the data is directed to the IPv4 decoder 704, which is controlled by the stack element 716, or whether the data is directed to the IPv6 decoder 706, which is controlled by the stack element 718. The arrows shown in Figure 5 depict the flow of data in the decoding stack and in the decoding element.

It is possible that the decoder comprises different versions of the protocol implemented thereby. Thus, for instance when forming the stack, a user fork is automatically created, which allows the user to select the protocol version to be used.

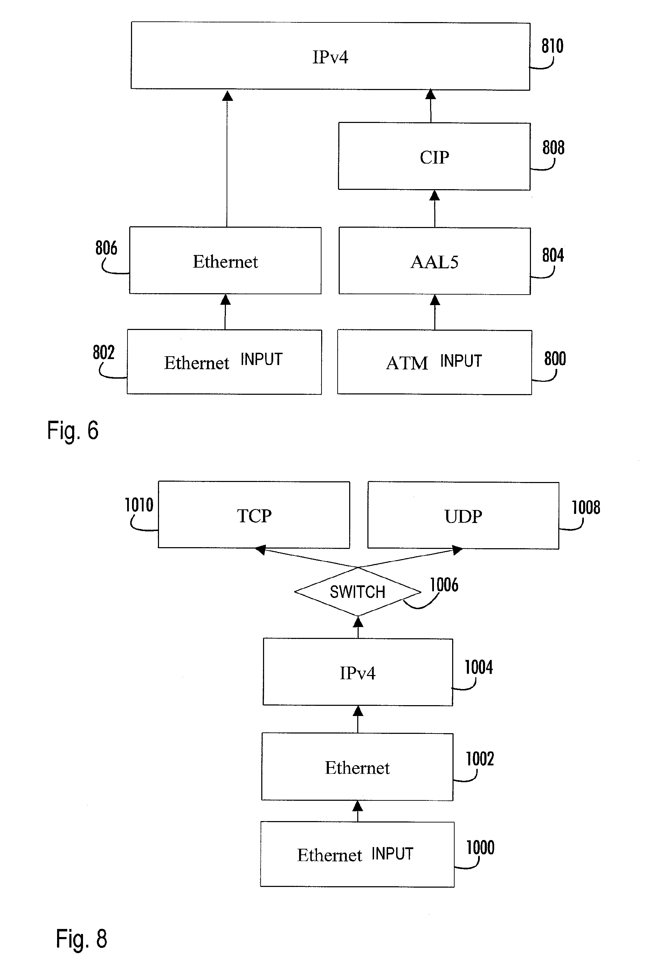

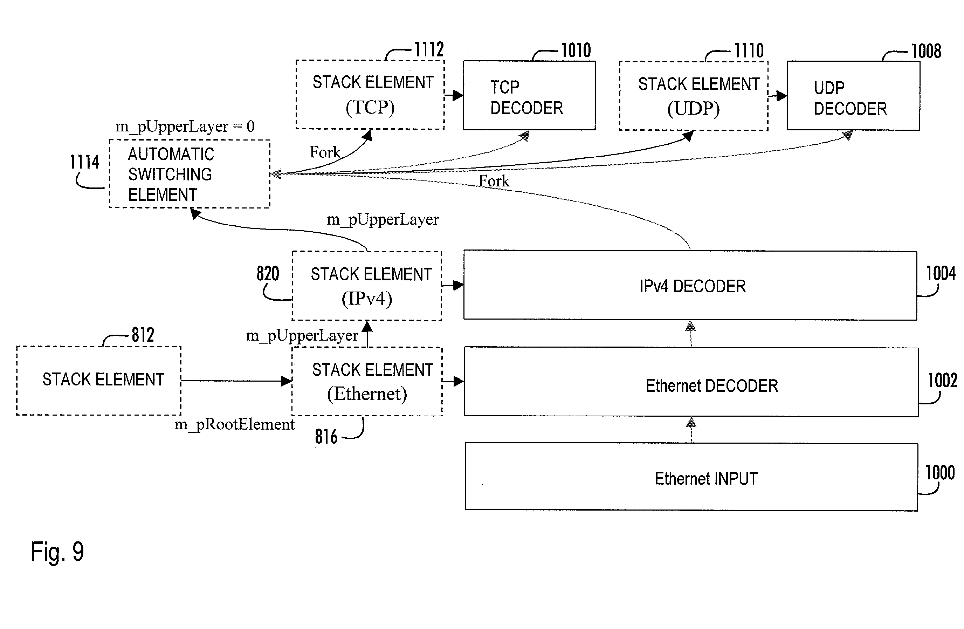

Figure 6 shows an example of a multi-input decoding stack according to an embodiment. In an embodiment the same decoding stack can be used over various physical interfaces. Separate decoding stacks are therefore not required for each different physical interface. The example shown in Figure 6 includes two different networks, which both employ the IPv4 protocol. In addition both networks use different lower protocol layers. In the example shown in Figure 6 the number of lower decoding layers at the same operational hierarchy level is two, an Ethernet 806 and an AAL5 804, which correspondingly receive data from an Ethernet input 802 or from an ATM input 800. Furthermore, from the AAL5 decoding layer 804 data is further directed to a CIP (classical IP) decoding layer 808 before being directed to an upper decoding layer 810. From the Ethernet layer 806 the data is directed straight to an upper decoding layer. In the case shown in Figure 8 the XML description is shown as follows:

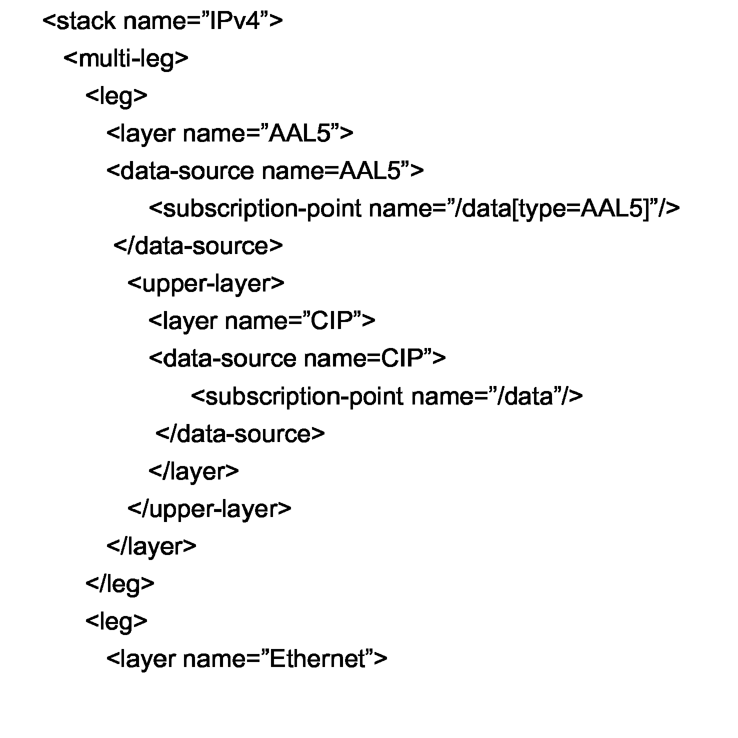

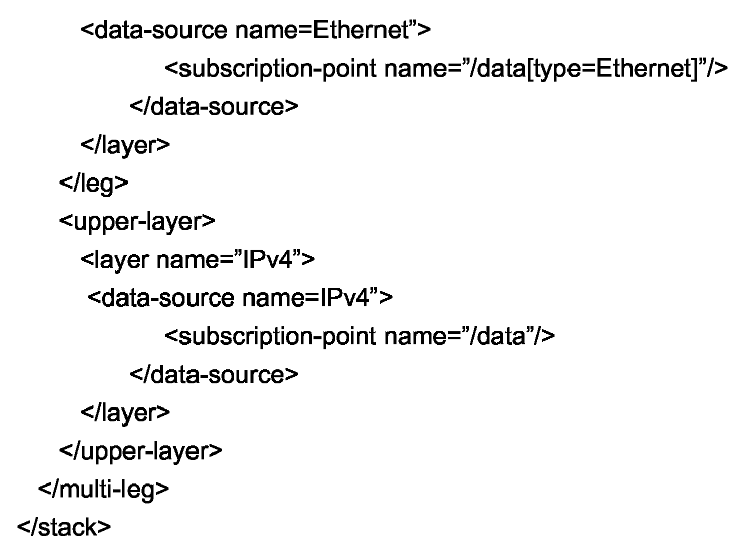

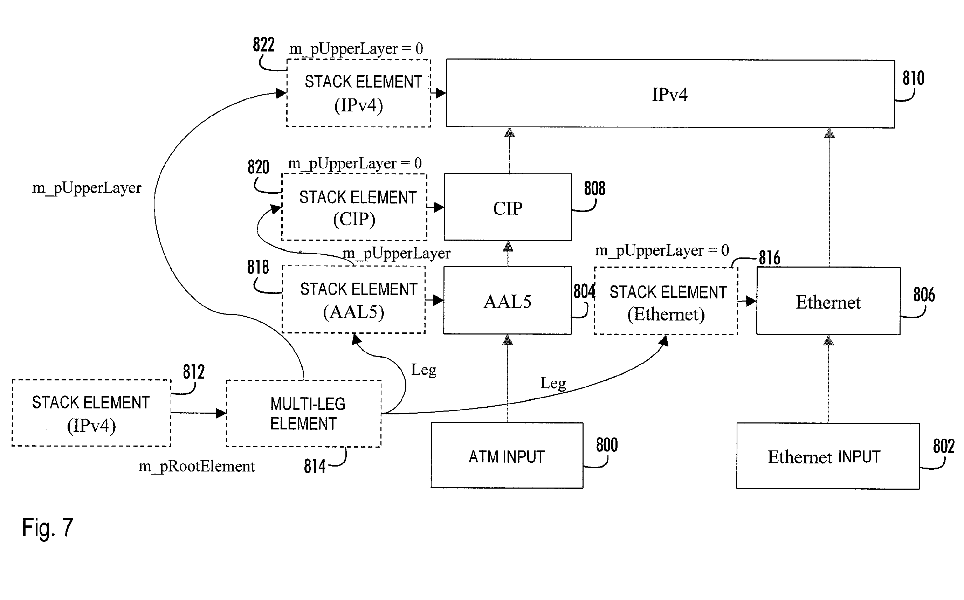

Consequently this embodiment includes at least two lower decoding layers 804, 806 in order to be able to connect the device to at least two types of networks. Figure 7 shows an example of how the decoding stack according to Figure 6 is implemented. In this embodiment a multi-leg element 814 is created that handles the formation of two branches in the decoding stack, the lowest decoders 804, 806 of the branches subscribing the data from the data transmission unit. The definition of the stack is retrieved in the IPv4 stack element 812. The multi-leg element 814 forms the stack elements: an Ethernet layer 816, which loads the Ethernet decoder 806; an AAL5 818, which loads the AAL5 decoder 804; and an IPv4 822, which loads the IPv4 decoder 810.

Figure 8 shows a decoding stack according an embodiment. The received data is directed to a lower decoding layer 1002, the Ethernet in this case, from a data input 1000 in accordance with the subscription placed by the decoding layer. From the lower decoding layer 1002 the data is directed to a following decoding layer 1004, the IPv4 in this case, and thereafter either to an upper decoding layer 1010, the TCP in this case, or to an upper decoding layer 1008, the UDP (user datagram protocol) in this case. Directing to a particular upper decoding layer 1008, 1010 is carried out on the basis of a control command detected in the switching element.

In this embodiment information exists below the switching element 1006, which allows deciding along which path the data is to flow. In the example shown in Figure 8 the IPv4 decoding layer 1004 comprises a parameter, which allows deciding which upper layer protocol propagates in the message. The processing unit thus detects the parameter identifying the protocol used by the received data, and the control command for controlling the processing of data in the decoding stack is formed on the basis of the parameter identifying the detected protocol. In this case the selection of the correct path takes place automatically irrespective of the user. The user is not needed to be asked for selections, since the lower decoding layer is provided with the information concerning along which path the data is to be forwarded to the upper decoding layers. The XML description of the embodiment shown in Figure 8 is shown for instance in the following manner:

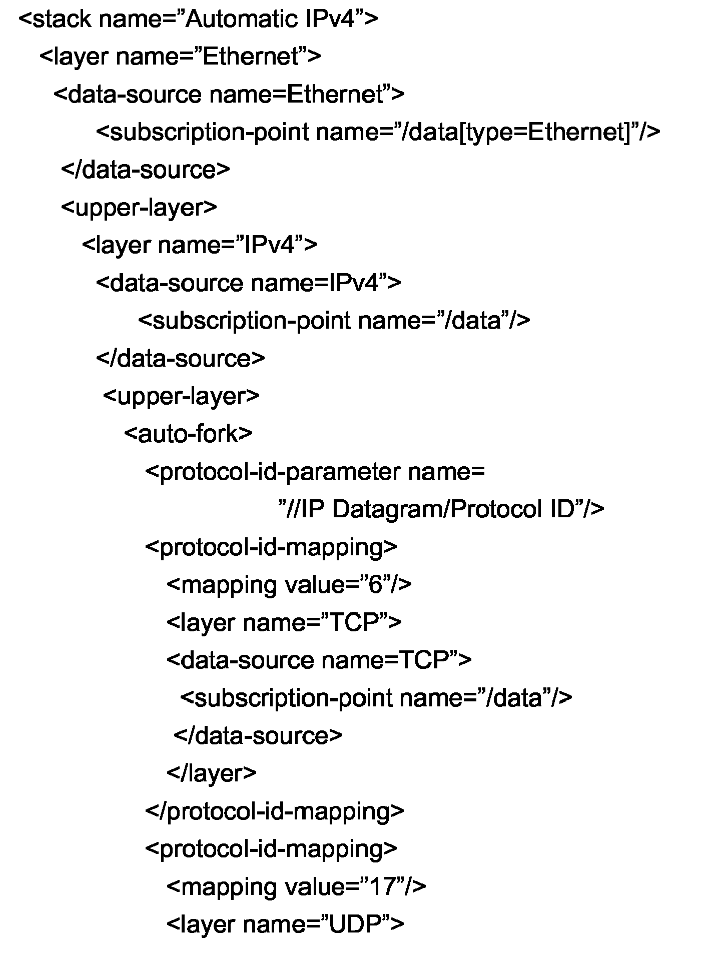

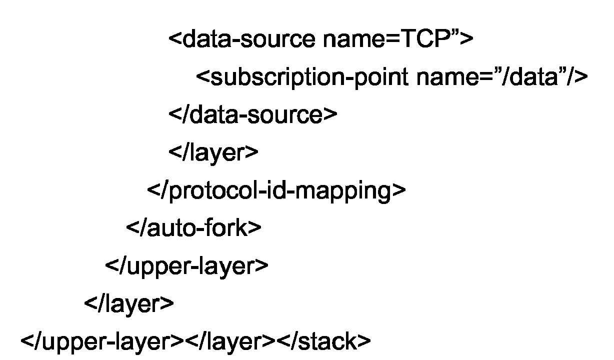

Figure 9 shows an example of how the decoding stack according to Figure 8 is implemented. Here, an automatic switching element 1114 directs the data in the IPv4 decoding layer 1004 to a TCP decoder 1010 or a UDP decoder 1008, which correspondingly operate under the control of a stack element 1110 or 1112. The IPv4 stack element 820 comprises the information about the parameter identifying the protocol used by the received data and delivers the information to the automatic switching element 1114, which has subscribed it on the basis of the "protocol-id-parameter" element in the XML description.

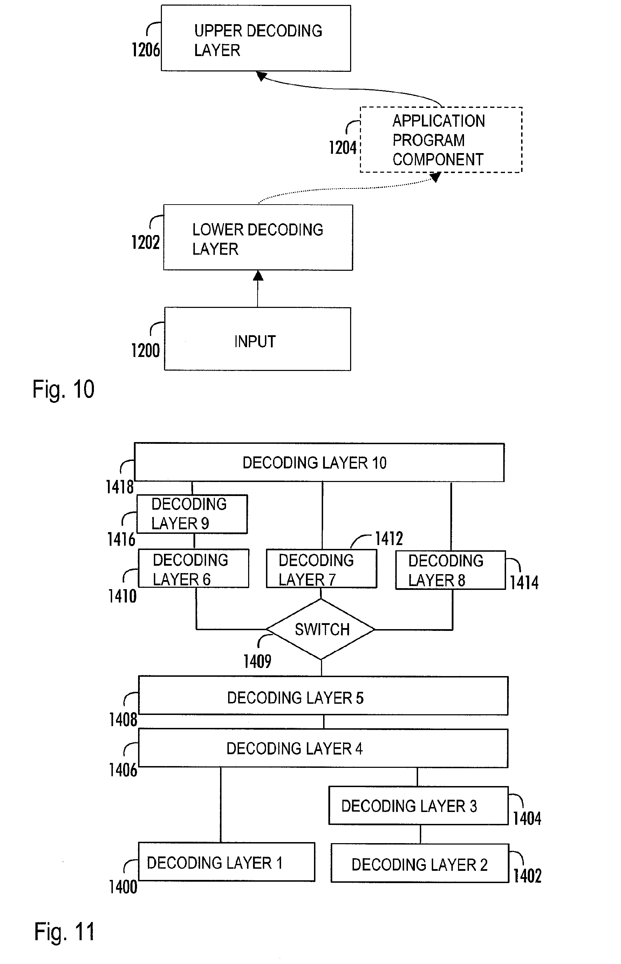

What can also be used in an embodiment is an application program component, such as a state machine, for deciding the routing information in the decoding stack. Then the switching element subscribes the routing information from the application program component. The application program component may also collect other information on signaling required in the decoding, whereby the decoders may subscribe this information from the application program component. Figure 10 shows an example of a decoding stack and an application engine. The data received on a lower decoding layer 1202 than an input 1200 is directed in this embodiment controlled by the application program component 1204 to one or more decoding layers 1206. The application program component 1204 collects information from several messages and frequently even from different interfaces and performs parameterization of the decoding layers on the basis of the collected information. Typically such application program components 1204 are required for instance for decipherment and in dynamic decoding layers. A specific element in a specific block is required for deciphering so that the data travels therethrough.

The communication between the decoding layers 1202, 1206 and the application program component 1204 can be implemented as the communication between the decoding layers. The decoding layer 1202, 1206 may comprise the application program component 1204 as the data source. When data is subscribed from the decoding layer above the application program component, the decoder subscribes the data that is defined in the data source element of this layer and the application program component subscribes the required data. The application program component 1204 retains the information on what parameters it requires from the decoder and how these are subscribed. The application program component is formed using an XML definition or when creating the decoding stack by means of the stack element. The application program component may also employ a particular indicator for subscribing data from the decoding stack. The XML description shown in Figure 10 may be as follows:

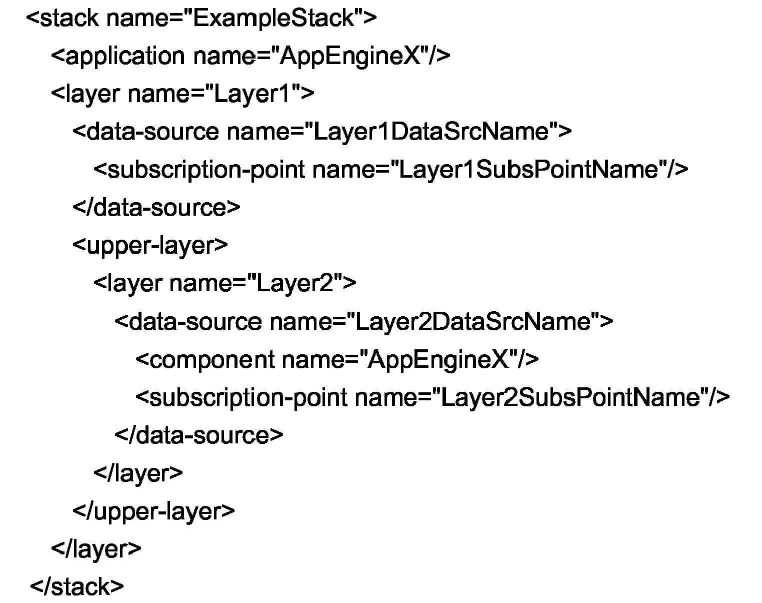

It is also possible to make references to other decoding stack definition files using the XML definitions.

Figure 11 shows an example according to an embodiment of the structure of a decoding stack. In the example shown in Figure 11 the decoding stack comprises two lower decoding layers 1 1400 and 2 1402 at the same operation hierarchy level. From the decoding level 1 1400 data may be directly directed to a decoding layer 4 1406 and from the decoding layer 2 1402 data can be directed through a decoding layer 3 1404 to the decoding layer 4 1406. A decoding layer 5 1408 is placed at the operational hierarchy level above the decoding layer 4 1406, whereafter the switching element 1409 directs the data to an alternative upper decoding layer 10 1418. The operational hierarchy level following the decoding layer 5 1408 comprises decoding layers 6 1410, 7 1412 and 8 1414, and data is delivered through the two last mentioned decoding layers directly to the upper decoding layer and from the decoding layer 6 1410 data is delivered through a decoding layer 9 1416 to the uppermost decoding layer.

An embodiment allows the processing unit to show a piece of information in the user interface of the device about what parts are found in the decoding stack. Thus, a structural schematic drawing of the decoding stack according to Figure 11 can be shown on the display of the device if desired. The processing unit can form a structural schematic drawing of the decoding stack based on the stack description files. It is also possible that access to new files, such as instructions, is made possible for the user from the structural schematic drawing of the decoding stack to be shown. The user may also for instance select a particular decoding layer from the structural schematic drawing by means of a user interface, in which case a new file is opened that is associated with the already selected decoding layer.

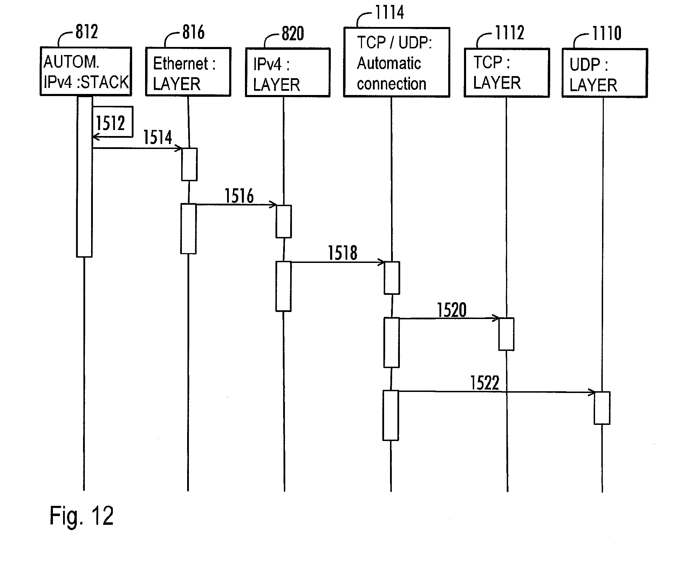

Figure 12 shows an example of the formation of stack elements in the decoding stack according to Figure 8. The uppermost boxes in Figure 12 depict the various entities of the stack and the arrows between the entities the flow of information. In 1512 the definition of the stack is retrieved in the IPv4 stack element 812. In 1514 the stack element is formed: The Ethernet layer 816 that loads the Ethernet decoder 1002 and places the subscription defined in the XML description to the lower layer 1000. In 1516 an upper stack element is formed: the IPv4 layer 820 that loads the IPv4 decoder 1004 and places the subscription defined in the XML description to the lower layer 1002. In 1518 an upper element is formed: the automatic switching element 1114 that subscribes the parameter identified by the protocol according to the XML description from the lower layer 1004. In 1520 the stack element is formed: the TCP layer 1112 that loads the TCP decoder 1010 and places the subscription defined in the XML description to the lower layer 1114, which further places the same subscription to the lower layer 1004. In 1522 the stack element is formed: the UDP layer 1110 that loads the UDP decoder 1008 and places the subscription defined in the XML description to the lower layer 1114, which further places the same subscription to the lower layer 1004.

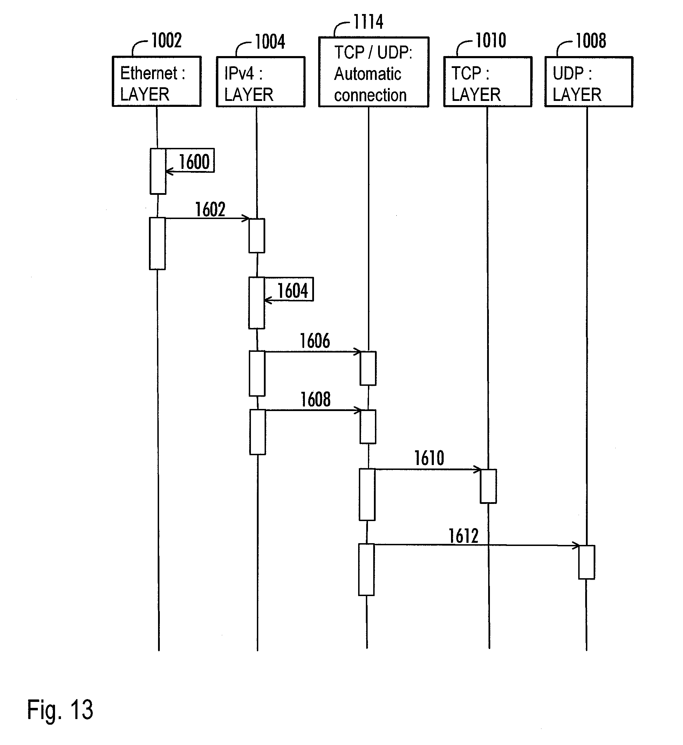

Figure 13 shows an example of how the information in the decoding stack is routed. The boxes at the top of the Figure illustrate the different entities in the stack and the arrows depict the flow of information between the entities. When the Ethernet frame is received in the input 1000 from the Ethernet connection to be monitored and on the basis of the subscription the frame is delivered to the Ethernet decoder 1002. In 1600 the Ethernet frame is decoded by means of the Ethernet decoder 1002. In 1602 the Ethernet payload is directed to the IPv4 layer 1004. In 1604 the IP frame is decoded in the IPv4 decoder 1004. In 1606 the parameter identifying the protocol is directed to the TCP/UDP switch 1114 from the IPv4 decoding layer 1004. In 1608 the IP payload is directed to the TCP/UDP switch 1114. If the identifier identifying the protocol is the TCP, then the IP payload is directed to the TCP decoder 1010 in 1610. If the identifier identifying the protocol is the UDP, then the IP payload is directed to the UDP decoder 1008 in 1612.

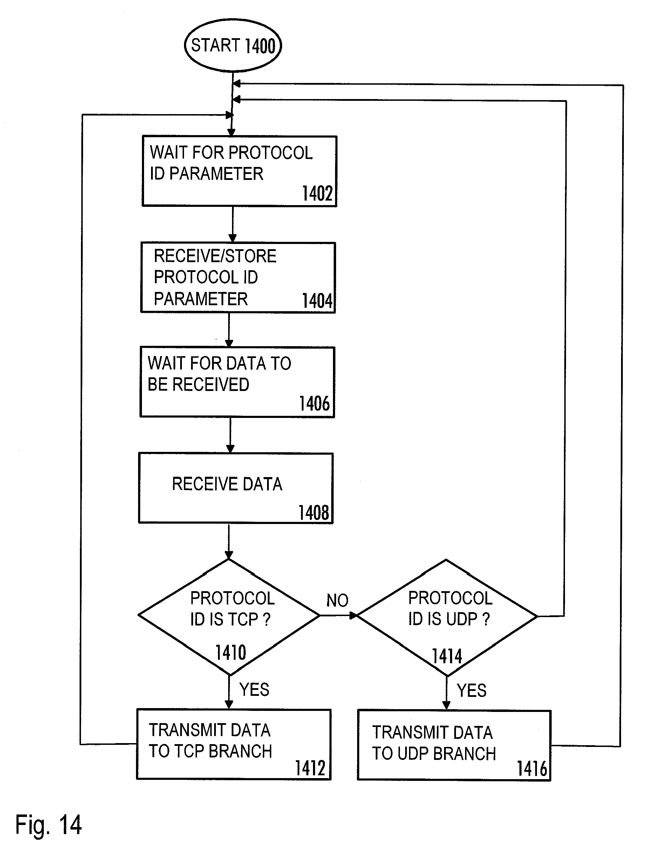

Figure 14 shows an example of a method for processing messages. The method starts in 1400. In 1402 the process waits for a parameter identifying the protocol used for receiving data. In 1404 the parameter identifying the protocol is received. In 1406 the process waits for data to be received. In 1408 the data is received. If it is noted in 1410 that the parameter identifying the protocol is the TCP, then the process proceeds to 1412, where the data is transmitted to the TCP branching equipment. If it is noted in 1414 that the parameter identifying the protocol is the UDP, then the process proceeds to 1416, where the data is transmitted to the UDP switching element.

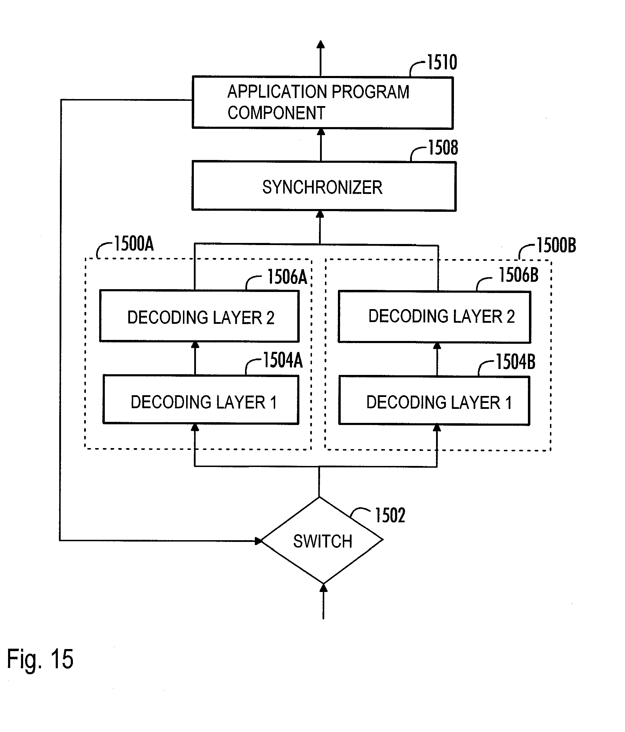

Figure 15 shows an example of dividing the decoding into several parallel decoding processes. The protocol decoding requires most of the processor power. The embodiments shown enable to easily divide the decoding into several threads, and thus enables to efficiently utilize multi-core processors. The decoding is divided into different processes in the vertical direction within the protocol stack, meaning that the connections to be monitored, which end at the same network element, are decoded in the same thread. When for instance an lub interface is monitored, the connections ending at the same mobile equipment are decoded in the same thread from the lowest protocol layer to the uppermost protocol layer, for instance from the decoding of the AAL2 layer to the decoding of the IP layer. The signaling is followed in an application program component 1510, which detects and follows the connections ending at different network components. On the basis of the connections the application program component controls the switching 1502 that controls the creation of parallel decoding processes 1500 and directs the data to be decoded on the basis of the connection to the decoding processes 1500A, 1500B. The decoding is carried out by means of parallel decoding layers 1504, 1506. The decoded data is synchronized in a synchronizer 1508 before it is delivered to the upper layers. The synchronization may be carried out either such that the chronological order of the decoded data is maintained or such that the decoded data from different connections is not mixed, instead the decoded data is at first processed from the first layer and then from the second layer depending on which one of them delivers the entire decoded data earlier. According to an aspect of the invention there is also provided a computer program product, which encodes the computer process for processing received messages. The embodiments of the computer process is shown in connection with Figures 3, 12, 13 and 14.

Even though the invention has above been described with reference to an example according to the accompanying drawings, it is apparent that the invention is not restricted thereto, but it may be modified in various ways within the scope of the accompanying claims.

## Claims

1. A method for processing messages in a data processing device comprising:
receiving data including messages from a data transmission system,
controlling the processing of received data in a decoding stack based on the decoding of the received data performed in the decoding layers, the decoding stack comprising at least a lower decoding layer and an upper decoding layer,
**characterized in that** the method also comprises:
forming (402) the decoding stack such that at least one decoding layer comprises two or more decoding layers based on different protocols,
providing (402) the decoding stack with at least one switching element,
detecting (406) a control command for controlling the processing of the data in the decoding stack, and
controlling (408) by means of the switching element the processing of data in the decoding stack based on the control command detected.

2. A method as claimed in claim 1, **characterized in that** the method further comprises detecting a parameter identifying the protocol used by the received data and forming a control command for controlling the processing of data in the decoding stack based on the parameter identifying the protocol detected.

3. A method as claimed in claim 1, **characterized in that** the decoding stack is formed such that the decoding stack comprises two or more lower decoding layers and one upper decoding layers.

4. A method as claimed in claim 1, **characterized in that** the decoding stack is formed such that the decoding stack comprises two or more upper decoding layers and one lower decoding layer.

5. A method as claimed in claim 1, **characterized in that** the decoding stack is formed such that the decoding stack comprises two or more decoding layers between the lower decoding layers and the upper decoding layers.

6. A method as claimed in claim 1, **characterized in that** the method further controls the processing of data in the decoding stack on the basis of the control commands received through the user interface of the data processing device.

7. A method as claimed in claim 1, **characterized in that** the processing of data is further controlled in the decoding stack on the basis of the parameterization performed by an application program component controlling the decoding layers.

8. A method as claimed in any one of the preceding claims,
**characterized in that** several parallel decoding layers are formed and data is decoded in parallel.

9. A method as claimed in claim 1, **characterized in that** a stack description is formed of the structure of the decoding stack and the stack description formed is shown in the user interface of the data processing device.

10. A data processing device comprising
a data transmission unit (106) configured to be connected to a data transmission system and to receive data including messages with the data transmission system, and
a processing unit (102) connected to the data transmission unit for processing data, the processing unit being configured to control the processing of received data in a decoding stack based on the decoding of the received data performed in the decoding layers, the decoding stack comprising at least a lower decoding layer and an upper decoding layer,
**characterized in that** the processing unit (102) is further configured to form the decoding stack such that at least one decoding layer comprises two or more decoding layers based on different protocols and at least one switching element, and is configured to detect a control command for controlling the processing of data in the decoding stack, and the switching element is configured to control the processing of data in the decoding stack based on the control command detected.

11. A device as claimed in claim 10, **characterized in that** the processing unit (102) is further configured to detect a parameter identifying the protocol used by the received data and to form a control command for controlling the processing of data in the decoding stack based on the parameter identifying the detected protocol.

12. A device as claimed in claim 10, **characterized in that** the processing unit (102) is further configured to form the decoding stack such that the decoding stack comprises two or more lower decoding layers and one upper decoding layer.

13. A device as claimed in claim 10, **characterized in that** the processing unit (102) is further configured to form the decoding stack such that the decoding stack comprises two or more upper decoding layers and one lower decoding layer.

14. A device as claimed in claim 10, **characterized in that** the processing unit (102) is further configured to form the decoding stack such that the decoding stack comprises two or more decoding layers between the lower decoding layer and the upper decoding layer.

15. A device as claimed in claim 10, **characterized in that** the device also comprises a user interface connected to the processing unit and the switching element is further configured to control the processing of data in the decoding stack on the basis of the control commands received through the user interface.

16. A device as claimed in claim 10, **characterized in that** the device further comprises an application program component configured to collect information from the received data and configured to perform parameterization of the decoding layers on the basis of the collected information, and the switching element is further configured to control the processing of data in the decoding stack based on the parameterization performed by the application program component controlling the decoding layers.

17. A device as claimed in claim 10, **characterized in that** the processing unit (102) is configured to form several parallel decoding layers and configured to decode data in parallel.

18. A device as claimed in claim 10, **characterized in that** the device further comprises a user interface connected to the processing unit and the processing unit (102) is also configured to form a stack description of the structure of the decoding stack and to show the formed stack description in the user interface.

19. A computer program product that encodes a computer process for processing received messages, the computer process comprising:
receiving data including messages from a data transmission system;
controlling the processing of received data in a decoding stack based on a decoding of the received data performed in the decoding layers, the decoding stack comprising at least a lower decoding layer and an upper decoding layer,
**characterized by**
forming a decoding stack such that at least one decoding layer comprises two or more decoding layers based on different protocols;
providing the decoding stack with at least one switching element;
detecting a control command for controlling the processing of data in the decoding stack, and
controlling by means of the switching element the processing of data in the decoding stack based on the control command detected.
